# EUROPEAN PATENT APPLICATION

(11) **EP 4 701 281 A1**
(43) Date of publication of application: **25.02.2026**
(21) Application number: 24810118.0
(22) Date of filing: 19.04.2024
(51) Int. Cl.: H04W 52/02

(54) **COMMUNICATION METHOD AND COMMUNICATION APPARATUS**

(30) Priority: 25.05.2023 CN 202310606808
(71) Applicant: Huawei Technologies Co., Ltd., Shenzhen, Guangdong 518129 (CN)
(72) Inventor: TANG, Yunshuai, Shenzhen, Guangdong 518129 (CN); RUAN, Wei, Shenzhen, Guangdong 518129 (CN); HAN, Yunfeng, Shenzhen, Guangdong 518129 (CN)
(74) Representative: Goddar, Heinz J.
(86) International application number: PCT/CN2024/088837
(87) International publication number: WO 2024/239871

(57) **Abstract**

This application provides a communication method and a communication apparatus, and relates to the communication field. In the method, a beacon frame sent by an AP includes at least one of first indication information and second indication information. The first indication information indicates whether a format of the beacon frame changes, or the first indication information indicates a format of the beacon frame. The second indication information indicates whether a TIM field in the beacon frame needs to be received. A STA detects at least one of the first indication information and the second indication information in the beacon frame, and receives the beacon frame based on a detection result. According to the solutions, the STA can receive the beacon frame in a corresponding format based on an indication of the AP, and does not need to detect all possible frame formats. This can reduce power consumption overheads and impact of a non-beacon frame on the beacon frame. In addition, the STA may not receive the TIM field based on the indication of the AP when the TIM field does not need to be received, thereby reducing power consumption overheads.

## Description

This application claims priority to Chinese Patent Application No. 202310606808.3, filed with the China National Intellectual Property Administration on May 25, 2023 and entitled "COMMUNICATION METHOD AND COMMUNICATION APPARATUS", which is incorporated herein by reference in its entirety.

### TECHNICAL FIELD

This application relates to the communication field, and specifically, to a communication method and a communication apparatus.

### BACKGROUND

A beacon (beacon) frame is a management frame in a wireless fidelity (wireless fidelity, Wi-Fi) technology, and is periodically sent by an access point (access point, AP) at a specific time interval, to notify an external world of existence of a wireless network of the access point. As a quantity of Wi-Fi devices increases, a probability of air interface collision increases. Consequently, a probability that the Wi-Fi devices are affected by a non-beacon frame during beacon frame receiving also increases, and receiving of the non-beacon frame results in an additional power consumption loss. In addition, as more information is carried in the beacon frame, power consumption of receiving the beacon frame also increases. Because some beacon devices are sensitive to standby power consumption, properly reducing the power consumption of receiving the beacon frame can extend standby time of these Wi-Fi devices.

### SUMMARY

This application provides a communication method and a communication apparatus, to reduce power consumption overheads caused by receiving a beacon frame.

According to a first aspect, a communication method is provided. The method may be performed by an AP, may be performed by a component (for example, a processor, a chip, or a chip system) of the AP, or may be implemented by a logical module or software that can implement all or some functions of the AP.

The method includes: generating a beacon frame, and sending the beacon frame. The beacon frame includes at least one of first indication information and second indication information. The first indication information indicates whether a format of the beacon frame changes, or the first indication information indicates the format of the beacon frame. The second indication information indicates whether a traffic indication map (traffic indication map, TIM) field in the beacon frame needs to be received.

According to a second aspect, a communication method is provided. The method may be performed by a station (station, STA), may be performed by a component (for example, a processor, a chip, or a chip system) of the STA, or may be implemented by a logical module or software that can implement all or some functions of the STA.

The method includes: detecting at least one of first indication information and second indication information in a beacon frame, and receiving the beacon frame based on a detection result. The first indication information indicates whether a format of the beacon frame changes, or the first indication information indicates the format of the beacon frame. The second indication information indicates whether a traffic indication map (traffic indication map, TIM) field in the beacon frame needs to be received.

According to the method provided in this application, an AP indicates, to a STA, a format of a beacon frame or whether the format of the beacon frame changes, so that the STA can receive the beacon frame in a corresponding format, and the STA does not need to detect all possible frame formats. Therefore, power consumption overheads and impact of a non-beacon frame on the beacon frame can be reduced. In addition, the AP indicates, to the STA, whether a TIM field needs to be received, so that the STA does not receive the TIM field when the TIM field does not need to be received. The power consumption overheads can be reduced by reducing time of receiving the beacon frame.

With reference to the second aspect, in a possible implementation, the receiving the beacon frame based on the detection result includes: receiving the beacon frame based on the first indication information when the first indication information is detected; and/or receiving or skipping receiving the TIM field based on the second indication information when the second indication information is detected.

With reference to the first aspect or the second aspect, in a possible implementation, the first indication information is a preset value or a count value N, the preset value is not equal to N, and N is an integer greater than or equal to 0. When the first indication information is the preset value, the first indication information indicates that the format of the beacon frame does not change. When N is greater than 0, the first indication information indicates that a format of an N^{th} beacon frame following the beacon frame changes. When N is equal to 0, the first indication information indicates that the format of the beacon frame changes.

According to this solution, if the AP wants to change the format of the beacon frame, the AP may notify a STA of the format change a plurality of beacon frame intervals in advance. In this way, even if the STA misses detecting one or more beacon frames, the STA can learn whether a format of a subsequent beacon frame changes provided that the STA detects one beacon frame. In this solution, whether the format of the subsequent beacon frame changes is notified in advance helps ensure that the STA can correctly learn whether a format of a currently received beacon frame changes, so that the STA can receive the beacon frame in a corresponding format.

With reference to the first aspect or the second aspect, in a possible implementation, the first indication information is carried in a vendor specific (vendor specific) field in the beacon frame; or the first indication information is carried in a newly added field in a frame body of the beacon frame.

The vendor specific field is used to carry private information of a vendor. The first indication information is carried by using the existing vendor specific field, so that signaling overheads can be reduced. In addition, a new field may be added to a current beacon frame to carry the first indication information.

With reference to the first aspect or the second aspect, in a possible implementation, the second indication information is carried in a medium access control (medium access control, MAC) header and/or a frame body (frame body) of the beacon frame.

With reference to the first aspect or the second aspect, in a possible implementation, the second indication information is carried in a reserved field, a frame control (frame control) field, a frame body, or a sequence control (sequence control) field. In this solution, the second indication information is carried by using an existing field such as the reserved field, the frame control field, or the sequence control field, so that bit overheads can be reduced.

With reference to the first aspect or the second aspect, in a possible implementation, the second indication information is carried in one or more of the following fields in the frame control field: power management (Power Management), to distribution system (distribution system, DS) (ToDS), from DS (FromDS), more fragments (More Fragments), or protected frame (Protected Frame).

With reference to the first aspect or the second aspect, in a possible implementation, when the TIM field indicates that there is to-be-transmitted data, the second indication information indicates that the TIM field needs to be received; or when the TIM field indicates that there is no to-be-transmitted data, the second indication information indicates that the TIM field does not need to be received.

The TIM field in the beacon frame occupies a large quantity of bits. If the TIM field does not need to be received, the TIM field may not be received, so that power consumption overheads for receiving the beacon frame can be reduced.

In addition, in some embodiments, this manner may also be referred to as a first energy saving mode.

Further, the second indication information further indicates whether at least one first field needs to be received. The at least one first field includes at least one of the following fields: a channel switch mode (channel switch mode, CSA) field, a timestamp (timestamp) field, a sequence number (sequence number) field, or a delivery traffic indication map (delivery traffic indication map, DTIM) count (DTIM count) field.

For example, when the TIM field changes or any one of the at least one first field changes, the second indication information indicates that the TIM field and the at least one first field need to be received; or when neither the TIM field nor the at least one first field changes, the second indication information indicates that the TIM field and the at least one first field do not need to be received.

In this application, that the timestamp field changes means that the timestamp field changes unexpectedly, for example, jumps or is reset. That the sequence number field changes means that the sequence number field changes unexpectedly, for example, jumps or is reset. That the DTIM changes means that the DTIM field changes unexpectedly, for example, jumps or is reset.

In some embodiments, this manner is also referred to as a second energy saving mode.

With reference to the first aspect or the second aspect, in a possible implementation, STAs associated with the AP are divided into a plurality of groups, and the second indication information includes indication information corresponding to the plurality of groups. When the TIM field indicates that there is to-be-transmitted data of at least one station STA in a first group, the indication information corresponding to the first group indicates that a STA in the first group needs to receive the TIM field; or when the TIM field indicates that there is no to-be-transmitted data of any STA in the first group, the indication information corresponding to the first group indicates that a STA in the first group does not need to receive the TIM field, where the first group is any one of the plurality of groups.

In this solution, the STAs are grouped, and when there is no to-be-transmitted data of the STA in the group, the STA in the group may not receive the TIM field, thereby further reducing power consumption overheads.

In some embodiments, this manner may also be referred to as a third energy saving mode.

Further, the second indication information further indicates whether a CSA field and at least one second field need to be received, and the at least one second field includes at least one of the following fields: a timestamp field, a sequence number field, or a delivery traffic indication map DTIM count field. When the CSA field changes, the second indication information indicates that the CSA field needs to be received; or when the CSA field does not change, the second indication information indicates that the CSA field does not need to be received; and when any one of the at least one second field changes, the second indication information indicates that the at least one second field needs to be received; or when none of the at least one second field changes, the second indication information indicates that the at least one second field does not need to be received.

In this solution, whether the CSA field and the at least one second field need to be received is further indicated, so that the CSA field and the at least one second field are not received when the CSA field and the at least one second field do not need to be received, thereby further reducing power consumption overheads.

In some embodiments, the second indication information is carried in a field that is not used or reserved in the MAC header. In this scenario, this manner may also be referred to as a fourth energy saving mode.

In some embodiments, the second indication information is carried in a frame body. In this scenario, this manner may also be referred to as a fifth energy saving mode.

Optionally, in a scenario in which the second indication information is carried in the frame body, the second indication information is located at a front part of the frame body. For example, the second indication information is adjacent to a basic service set identifier (basic service set identifier, BSSID) field in the frame body and follows the BSSID field. In this way, the STA can detect the second indication information as early as possible, and then determine, based on the second indication information, whether the TIM field and the like need to be received.

With reference to the first aspect or the second aspect, in a possible implementation, the beacon frame further includes third indication information, and the third indication information indicates to enable one of a plurality of energy saving modes. The plurality of energy saving modes include the first energy saving mode, the second energy saving mode, the third energy saving mode, the fourth energy saving mode, and the fifth energy saving mode.

According to a third aspect, a communication apparatus is provided and includes a module or unit configured to perform the method in any one of the first aspect or the possible implementations of the first aspect.

According to a fourth aspect, a communication apparatus is provided and includes a module or unit configured to perform the method in any one of the second aspect or the possible implementations of the second aspect.

According to a fifth aspect, a communication apparatus is provided and includes a processor. The processor is coupled to a memory, the memory is configured to store a computer program or instructions, and the processor is configured to execute the computer program or the instructions stored in the memory, to implement the method in any one of the first aspect or the possible implementations of the first aspect.

In a possible implementation, the apparatus further includes the memory coupled to the processor.

In a possible implementation, there are one or more processors, and/or one or more memories.

In a possible implementation, the memory and the processor may be integrated together, or the memory and the processor are disposed separately.

In a possible implementation, the apparatus further includes a communication interface, and the processor is coupled to the communication interface.

In an implementation, the apparatus is an AP. For example, the communication interface may be a transceiver or an input/output interface.

In another implementation, the apparatus is a chip in the AP. For example, the communication interface may be an input/output interface.

According to a sixth aspect, a communication apparatus is provided and includes a processor. The processor is coupled to a memory, the memory is configured to store a computer program or instructions, and the processor is configured to execute the computer program or the instructions stored in the memory, to implement the method in any one of the second aspect or the possible implementations of the second aspect.

In a possible implementation, the apparatus further includes the memory coupled to the processor.

In a possible implementation, there are one or more processors, and/or one or more memories.

In a possible implementation, the memory and the processor may be integrated together, or the memory and the processor are disposed separately.

In a possible implementation, the apparatus further includes a communication interface, and the processor is coupled to the communication interface.

In an implementation, the apparatus is a STA. For example, the communication interface may be a transceiver or an input/output interface.

In another implementation, the apparatus is a chip in the STA. For example, the communication interface may be an input/output interface.

According to a seventh aspect, a processor is provided, including an input circuit, an output circuit, and a processing circuit. The processing circuit is configured to: receive a signal via the input circuit, and transmit a signal via the output circuit, so that the processor performs the method in any one of the foregoing aspects or any one of the possible implementations of any one of the foregoing aspects.

In a specific implementation process, the processor may be a chip, the input circuit may be an input pin, the output circuit may be an output pin, and the processing circuit may be a transistor, a gate circuit, a trigger, various logic circuits, or the like. An input signal received by the input circuit may be received and input by, for example, but not limited to, a receiver, a signal output by the output circuit may be output to, for example, but not limited to, a transmitter and transmitted by the transmitter, and the input circuit and the output circuit may be a same circuit, where the circuit is used as the input circuit and the output circuit at different moments. Specific implementations of a processor and various circuits are not limited in this application.

According to an eighth aspect, a communication system is provided, including at least one of the communication apparatus provided in the third aspect and the communication apparatus provided in the fourth aspect, or including at least one of the communication apparatus provided in the fifth aspect and the communication apparatus provided in the sixth aspect.

According to a ninth aspect, a computer program product is provided. The computer program product includes a computer program (which may also be referred to as code or instructions). When the computer program is run, a computer is enabled to perform the method in any one of the foregoing aspects or any one of the possible implementations of any one of the foregoing aspects.

According to a tenth aspect, a computer-readable storage medium is provided. The computer-readable storage medium stores a computer program (which may also be referred to as code or instructions). When the computer program is run on a computer, the computer is enabled to perform the method in any one of the foregoing aspects or any one of the possible implementations of any one of the foregoing aspects.

According to an eleventh aspect, a chip is provided, and includes a processor configured to invoke a computer program from a memory and run the computer program, to enable a communication apparatus on which the chip is installed to perform the method in any one of the foregoing aspects or any one of the possible implementations of any one of the foregoing aspects.

According to a twelfth aspect, a communication apparatus is provided. The communication apparatus includes an interface and a processor. The interface is configured to send and/or receive a signal, to enable the processor to perform the method in any one of the foregoing aspects or any one of the possible implementations of any one of the foregoing aspects.

### BRIEF DESCRIPTION OF DRAWINGS

FIG. 1 is a diagram of a communication system according to this application;
FIG. 2 is a diagram of receiving a beacon frame according to this application;
FIG. 3 is a schematic flowchart of a communication method according to this application;
FIG. 4 is a diagram of a format of first indication information in a beacon frame according to this application;
FIG. 5 is a diagram of a structure of a TIM field in a beacon frame according to this application;
FIG. 6 is a diagram of a basic structure of a beacon frame according to this application;
FIG. 7 is a diagram of an implementation of second indication information according to this application;
FIG. 8 is a diagram of a structure of an element indicating a STA group in a beacon frame according to this application;
FIG. 9 is a diagram of a format of third indication information in a beacon frame according to this application;
FIG. 10 is a block diagram of a communication apparatus according to an embodiment of this application; and
FIG. 11 is a block diagram of another communication apparatus according to an embodiment of this application.

### DESCRIPTION OF EMBODIMENTS

The following describes the technical solutions in embodiments of this application with reference to the accompanying drawings in embodiments of this application.

In the descriptions of this application, unless otherwise specified, "/" indicates that associated objects are in an "or" relationship. For example, A/B may represent A or B. The term "and/or" in this specification describes only an association relationship for describing the associated objects and represents that three relationships may exist. For example, A and/or B may represent the following three cases: Only A exists, both A and B exist, and only B exists. A and B each may be singular or plural. In addition, in the descriptions of this application, unless otherwise specified, "plurality of" means two or more. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. It should be understood that, in this application, descriptions similar to "in a case that...", "if...", "when...", "it is assumed that...", and the like may be used interchangeably.

The technical solutions provided in this application are applicable to a wireless local area network (wireless local area network, WLAN) scenario, for example, may be applicable to an IEEE 802.11 system standard, such as the 802.11a/b/g standard, the 802.11n standard, the 802.11ac standard, the 802.11ax standard, or a next-generation standard of the 802.11ax standard, such as the 802.11be standard or a subsequent standard.

A person skilled in the art can easily understand that the aspects in this application may be extended to other networks that use various standards or protocols, for example, a high performance radio local area network (high performance radio local area network, HIPERLAN), a wide area network (wide area network, WAN), a personal area network (personal area network, PAN), or another network that is currently known or that is developed later. Embodiments of this application are further applicable to wireless local area network systems such as an internet of things (internet of things, IoT) network or a vehicle to X (vehicle to X, V2X) network.

The foregoing communication systems applicable to this application are merely examples, and the communication systems applicable to this application are not limited thereto.

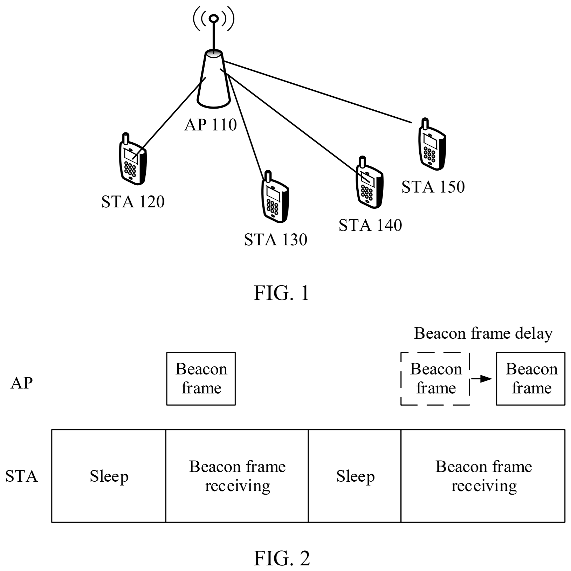

FIG. 1 is a diagram of a communication system according to this application. As shown in FIG. 1, the system may include one or more access points (access point, AP), for example, an AP 110, and one or more stations (station, STA) connected to the AP 110, for example, a STA 120, a STA 130, a STA 140, and a STA 150. It should be understood that the system shown in FIG. 1 may further include more APs and/or STAs, and the STA may also be referred to as a workstation.

In this application, the STA is a device that can be connected to a wireless network or a device equipped with a wireless network interface. The STA may communicate with an internal network or an external network of the wireless network through the AP. For example, the STA may be a mobile phone supporting a Wi-Fi communication function, a tablet computer supporting a Wi-Fi communication function, a set-top box supporting a Wi-Fi communication function, a smart television supporting a Wi-Fi communication function, a smart wearable device supporting a Wi-Fi communication function, an in-vehicle communication device supporting a Wi-Fi communication function, a smart home supporting a Wi-Fi communication function, a sensor supporting a Wi-Fi communication function in an internet of things (IoT, internet of things), or a computer supporting a Wi-Fi communication function. Optionally, the STA may support a plurality of WLAN standards of the 802.11 family, such as 802.11ax, 802.11ac, 802.11n, 802.11g, 802.11b, 802.11a, 802.11be, and/or a next generation of 802.11be.

The AP is a device that has a wireless-to-wired bridging function. The AP may provide a wireless access service, allow another wireless device to access the AP, and provide data access. Specifically, the AP may be a terminal device (such as a mobile phone) or a network device (such as a router) with a Wi-Fi chip. The AP may be a device that supports a WLAN standard in the 802.11 family, such as 802.11ax, 802.11ac, 802.11n, 802.11g, 802.11b, 802.11a, 802.11be, and/or a next generation of 802.11be.

To successfully connect to the AP, the STA needs to go through three phases: a scanning phase, a link authentication phase, and an association phase. The scanning phase is classified into active scanning and passive scanning. Passive scanning means that the STA listens to a beacon frame periodically sent by the AP on each channel, to obtain related information of the AP. When the STA needs to save power, passive scanning may be used.

In a plurality of versions (such as 802.11b, 802.11a, 802.11n, 802.11ac, 802.11ax, and 802.11be) of the 802.11 technology that are developed to date, the STA needs to detect different frame formats to receive corresponding frame formats. Because the beacon frame may be sent in any frame format, the STA needs to detect and receive all possible frame formats. For example, refer to a diagram of receiving a beacon frame shown in FIG. 2. The STA periodically sleeps and periodically receives the beacon frame. A second beacon frame receive window backs off due to a timing offset or AP collision, and the STA may first receive a non-beacon frame. Because the STA does not learn of a format of the beacon frame, the STA needs to receive at least a medium access control (medium access control, MAC) header of a current frame to learn that the current frame is the non-beacon frame. This not only causes a power consumption loss, but also causes a probability of missing the beacon frame.

In addition, with development of technologies, more information is carried in the beacon frame, and power consumption of receiving the beacon frame also increases. However, in practice, most information in the beacon frame is unchanged, but the STA still needs to consume power to receive the complete beacon frame. Consequently, standby time of the STA is affected.

In view of this, this application provides a communication method. The method can reduce power consumption overheads caused by receiving the beacon frame.

The following describes in detail the solution provided in this application with reference to corresponding flowcharts. It may be understood that in the schematic flowcharts provided in this application, an example in which different communication apparatuses are used as execution bodies of the interaction illustration is mainly used to illustrate the method. However, the execution bodies of the interaction illustration are not limited in this application. For example, an AP in the schematic flowchart may alternatively be a chip, a chip system, or a processor that supports the AP in implementing the method, or may be a logical module or software that can implement all or some functions of the AP. A STA in the schematic flowchart may alternatively be a chip, a chip system, or a processor that supports the STA in implementing the method, or may be a logical module or software that can implement all or some functions of the STA.

Names and meanings of some fields in this application comply with current technologies and protocols. With evolution of technologies, the fields may be combined with other fields, or the fields may be split, or names of the fields may be changed. This application is also applicable to the foregoing changes, and the changes do not constitute any limitation on the protection scope of this application.

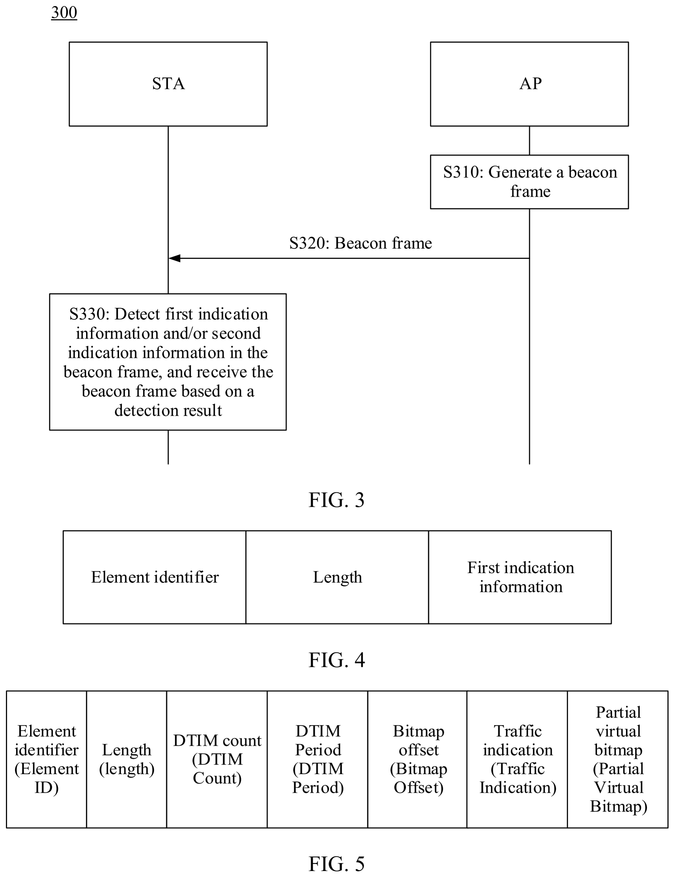

FIG. 3 is a schematic flowchart of a communication method according to this application. The method 300 may include S310 to S330. The following describes the steps.

S310: An AP generates a beacon frame.

The beacon frame includes at least one of first indication information and second indication information. In other words, the beacon frame includes one of the first indication information and the second indication information, or the beacon frame includes both the first indication information and the second indication information.

In some embodiments, the first indication information indicates whether a format of the beacon frame changes. In other words, the first indication information indicates whether the format of the beacon frame changes relative to a beacon frame last sent by the AP.

For example, the first indication information is a preset value or a count value N, the preset value is not equal to N, and N is an integer greater than or equal to 0. When the first indication information is the preset value, the first indication information indicates that the format of the beacon frame does not change. When N is greater than 0, the first indication information indicates that a format of an N^{th} beacon frame following the beacon frame changes. When N is equal to 0, the first indication information indicates that the format of the beacon frame changes.

For example, the preset value is 255, and N may be any integer from 0 to 10. If the first indication information is 255, it indicates that the format of the beacon frame does not change, that is, the format of the beacon frame is the same as a format of a previous beacon frame. If the first indication information is a number from 1 to 10, for example, 5, it indicates that a format of a fifth beacon frame following the beacon frame changes. If the first indication information is 0, it indicates that the format of the beacon frame changes. When the first indication information is 0, 10 beacon frames before the beacon frame carry, in a sending time sequence, the following information indicating whether the beacon frame format changes: 10, 9, 8, 7, 6, 5, 4, 3, 2, and 1.

Optionally, the first indication information may be 8 bits.

According to this solution, if the AP wants to change the format of the beacon frame, the AP may notify a STA of the format change a plurality of beacon frame intervals in advance. In this way, even if the STA misses detecting one or more beacon frames, the STA can learn whether a format of a subsequent beacon frame changes provided that the STA detects one beacon frame. In this solution, whether the format of the subsequent beacon frame changes is notified in advance helps ensure that the STA can correctly learn whether a format of a currently received beacon frame changes, so that the STA can receive the beacon frame in a corresponding format.

In some other embodiments, the first indication information indicates the format of the beacon frame.

In other words, the first indication information indicates a specific format used by the beacon frame. For example, if there are eight formats that may be used by the beacon frame, 3 bits may be used to indicate one of the eight formats.

If the AP does not notify the STA of the format of the beacon frame, the STA sequentially receives the beacon frame by using possible formats of the beacon frame until the STA receives the beacon frame. According to this solution, the STA may receive the beacon frame in a specific format based on an indication of the AP, and does not need to attempt to receive the beacon frame in another format. This can reduce power consumption.

In addition, formats that may be used by the beacon frame and another type of frame may be different. If the STA does not learn of the format of the beacon frame, and the another type of frame arrives at a STA side before the beacon frame in a beacon frame receive window, the beacon frame may be missed due to receiving of the another type of frame by the STA. According to this solution, if the format of the another type of frame is different from the format that is of the beacon frame and that is indicated by the AP, the STA may learn whether a currently received frame is the beacon frame, and discard the currently received frame if the currently received frame is not the beacon frame. This helps ensure that no beacon frames are missed.

The beacon frame includes a MAC header (MAC header) and a frame body (frame body). The frame body is also referred to as a data bit, and is responsible for transmitting upper-layer data (payload) between the AP and the STA.

In an example, the first indication information may be carried in a field that is not currently used or is reserved in the MAC header. This can reduce bit overheads.

In an example, the first indication information may be carried in a newly added field in the frame body. In other words, a field may be added to the frame body of the current beacon frame to carry the first indication information. The beacon frame obtained by adding the field carrying the first indication information is the beacon frame in S310.

The frame body may include a plurality of elements (element), and each element includes the following fields: an element identifier (element ID), a length (length), and element content. Element ID identifies different fields included in the beacon frame. Length indicates a length of the element, and the element content carries specific information.

Refer to a structure shown in FIG. 4. An element may be newly added to the beacon frame, and an element content field of the element carries the first indication information.

In another example, the first indication information may be carried in a field that is not currently used in the frame body. For example, the first indication information may be carried in a vendor specific (vendor specific) field. The vendor specific field is used to carry private information of a vendor, for example, a private feature capability of the vendor. In this solution, signaling overheads can be reduced by using an existing field to carry the first indication information.

The second indication information may indicate whether a TIM field in the beacon frame needs to be received.

The TIM field is a part of the frame body, is a traffic indication map based on a bitmap structure, and identifies buffer information of the AP. Specifically, the AP buffers a frame for a STA that is in a sleep state. At intervals, the AP attempts to transmit the buffered frame to the STA that is in the sleep state. The TIM field indicates a STA that needs to receive to-be-transmitted data. Content of a TIM is a virtual bitmap, and the virtual bitmap is a logical structure including a plurality of (for example, 2088) bits. Each bit is bound to an association identifier (association ID, AID), that is, each bit corresponds to one STA. When data is buffered for an association identifier, a corresponding bit is set to 1. When no data is buffered for an association identifier, a corresponding bit is set to 0.

For example, FIG. 5 is a diagram of a structure of the TIM field. Element ID and Length have been described above, and details are not described below again. Table 1 briefly describes meanings of other fields in the TIM. For more detailed content of each field in the TIM field, refer to the conventional technology.

**Table 1**

| English full name | Chinese full name | Function |
|---|---|---|
| DTIM Count | DTIM count | A delivery traffic indication map (delivery traffic indication map, DTIM) is a special TIM that not only buffers unicast information but also indicates multicast information buffered by the AP. |
| | | Generally, each beacon frame includes one piece of TIM information. However, whether the TIM is specifically a DTIM needs to be determined based on two parameters: DTIM Count and DTIM Period. DTIM Period is a period and is a fixed value, indicating that a DTIM occurs after several TIMs. DTIM Count is a variable value. DTIM Count is determined based on DTIM Period. For example, if DTIM Period is 3, DTIM Count decreases from 2 until DTIM Count reaches 0. When DTIM Count is 0, the TIM is a DTIM. When DTIM Count is 2 or 1, the TIM is a TIM. |
| DTIM Period | DTIM period | This indicates a quantity of beacon intervals (beacon interval) between two DTIM frames. A value 0 is reserved. The beacon interval indicates a quantity of time units between two beacon frames. |
| Bitmap Offset | Bitmap offset | This indicates an offset of an AID. To reduce a bandwidth, only some virtual bitmaps can be sent by using Bitmap Offset. Bitmap Offset is relative to a first bit of a virtual bitmap. The STA can infer which parts of the virtual bitmap are included based on Bitmap Offset and Length. |
| Traffic Indication | Traffic indication | This indicates whether a multicast/broadcast data packet is buffered. |
| Partial Virtual Bitmap | Partial virtual bitmap | Content of the TIM is a virtual bitmap, and each bit corresponds to one association identifier (association ID). When data is buffered for an association identifier, a corresponding bit is set to 1. When no data is buffered for an association identifier, a corresponding bit is set to 0. |

The TIM field in the beacon frame occupies a large quantity of bits. If the TIM field does not need to be received, the STA may not receive the TIM field, so that power consumption overheads for receiving the beacon frame can be reduced.

S320: The AP sends the beacon frame.

S330: The STA detects the first indication information and/or the second indication information in the beacon frame, and receives the beacon frame based on a detection result.

When the beacon frame includes the first indication information, the STA may determine, based on the first indication information, whether the format of the beacon frame changes. If the format of the beacon frame does not change, the beacon frame is received in a format used for receiving a previous beacon frame; or if the format of the beacon frame changes, the beacon frame is received in a format different from the format used for receiving a previous beacon frame. When the beacon frame includes the second indication information, the STA may determine, based on an indication of the second indication information, whether the TIM field needs to be received. When the TIM field needs to be received, the STA receives the TIM field, and when the TIM field does not need to be received, the STA does not receive the TIM field.

According to the method provided in this application, the AP indicates, to the STA, the format of the beacon frame or whether the format of the beacon frame changes, so that the STA can receive the beacon frame in a corresponding format, and the STA does not need to detect all possible frame formats. Therefore, power consumption overheads and impact of a non-beacon frame on the beacon frame can be reduced. In addition, the AP indicates, to the STA, whether the TIM field needs to be received, so that the STA does not receive the TIM field when the TIM field does not need to be received. The power consumption overheads can be reduced by reducing time of receiving the beacon frame.

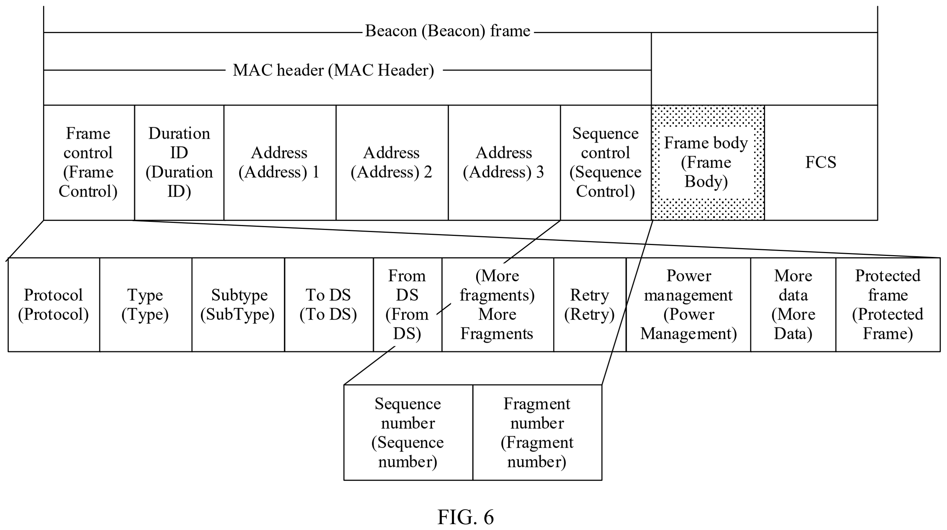

The following describes the second indication information in more detail with reference to FIG. 6.

FIG. 6 is a diagram of a basic structure of a beacon frame. Refer to FIG. 6. The beacon frame includes a MAC header, a frame body, and a frame check sequence (frame check sequence, FCS). For the FCS, refer to the conventional technology. Details are not described herein.

The MAC header includes a frame control (frame control) field, a duration (duration) ID field, an address (address) field, and a sequence control (sequence control) field.

### (1) Frame Control

Table 2 describes fields included in Frame Control and the meanings of the fields.

**Table 2**

| English full name | Chinese full name | Function |
|---|---|---|
| Protocol | Version | This indicates a version number of a current frame. So far, there is only one version of 802.11, so a protocol number is 0. |
| Type | Type | This defines a frame type of 802.11. The frame type includes a management frame, a control frame, and a data frame. |
| Subtype | Subtype | This defines a subtype of a frame. The subtype is determined based on Type. For example, if Type is 00, the type of the frame is a management frame, and if Subtype is 1000, the subtype of the frame is a beacon frame. |
| ToDS | To DS | If this field is set to 1, it indicates that the frame is a frame sent by a base station subsystem (base station subsystem, BSS) to a distribution system (distribution system, DS). |
| FromDS | From DS | If this field is set to 1, it indicates that the frame is sent from the DS (distribution system) to the BSS. |
| More Fragments | More fragments | A length is 1 bit. This field is used to illustrate whether a long frame is segmented and whether other frames exist. If an upper-layer packet is fragmented at a MAC layer, a value of this field is set to 1 by all fragments except a last fragment. |
| Retry | Retry | A length is 1 bit. If the 1 bit is 1, it indicates that the frame is a retransmitted frame. |
| Power Management | Power supply/Power management | A length is 1 bit. If the 1 bit is 1, an energy saving mode is entered after current frame exchange is complete. For an AP, this bit needs to be 0 because some important management functions need to be performed. For a STA, this bit may be 1. |
| More Data | Still/More data | A length is 1 bit. This field is related to power saving. If the 1 bit is 1, it indicates that at least one frame is to be sent to a STA that is in a sleep state. |
| Protected Frame | Protected frame | A length is 1 bit. If the 1 bit is 1, it indicates that a frame body field has been encrypted using an encryption encapsulation algorithm. This field is set to 1 only in a data frame and an "authentication" management frame. |

### (2) Duration ID

This field has a plurality of functions. A function herein is to set a network allocation vector (network allocation vector, NAV). In other words, the field is used to set a channel occupation time (in a unit of µs). The STA needs to update the NAV in real time based on MAC headers of all received frames, and prevents another STA from using the channel.

### (3) Address

Refer to FIG. 5. The MAC header may include a plurality of addresses, for example, may include an address 1, an address 2, and an address 3 shown in the figure. The address 1 is a destination MAC address. Because the beacon frame is a broadcast frame, all destination addresses are FF. The address 2 is a source MAC address. Because the beacon frame is sent by the AP, the source MAC address is a MAC address of the AP. The address 3 is used by a base station and a transmission system for filtering.

### (4) Sequence Control

Sequence Control includes a sequence number (sequence number) field and a fragment number (fragment number) field. Sequence number is used to indicate a sequence number of an aggregate MAC service data unit (aggregate MAC service data unit, A-MSDU) or a MAC protocol data unit (MAC protocol data unit, MPDU). Fragment number indicates a label number of each segment of a MAC service data unit (MAC service data unit, MSDU) or an MPDU.

In some embodiments, the second indication information may be carried in the MAC header of the beacon frame and/or the frame body field of the beacon frame.

There are some unused and reserved fields in the MAC header and the frame body field of the current beacon frame, and the second indication information may be carried in these unused and/or reserved fields. In this way, the beacon frame provided in this application is formed. In this solution, because no new field needs to be added, signaling overheads can be reduced.

In an example, the second indication information may be carried in the frame control field in the MAC header.

For example, the second indication information may be carried in one or more of the following fields in the frame control field: Power Management, ToDS, FromDS, More Frag-ments, or Protected Frame. It should be understood that the fields are useless fields in the beacon frame.

For example, the second indication information is carried in Power Management. In this case, if Power Management is 1, it may indicate that the TIM field needs to be received; or if Power Management is 0, it may indicate that the TIM field does not need to be received. Alternatively, meanings of 0 and 1 may be opposite.

In another example, the second indication information may alternatively be carried in Fragment number in Sequence Control in the MAC header.

In addition, it should be understood that a new field may be added to the frame body field of the MAC header and/or the beacon frame to carry the second indication information.

The following describes in detail several possible implementations of the second indication information.

### Manner 1

When the TIM field indicates that there is to-be-transmitted data, the second indication information indicates that the TIM field needs to be received. When the TIM field indicates that there is no to-be-transmitted data, the second indication information indicates that the TIM field does not need to be received.

The TIM field is used to indicate buffer information of the AP. If the TIM field indicates that there is to-be-transmitted data of one or more STAs associated with the AP, that is, partial virtual bitmaps in the TIM field have at least one 1, the STAs associated with the AP need to receive the TIM field. If the TIM field indicates that there is no to-be-transmitted data of any STA associated with the AP, that is, the partial virtual bitmaps in the TIM field are all 0, the STAs associated with the AP do not need to receive the TIM field.

In manner 1, the second indication information may be 1 bit.

In some embodiments, when the second indication information indicates that the TIM field needs to be received, the STA may receive all content of the TIM field, or may receive only a part of content of the TIM field. For example, the STA may receive a field other than a DTIM count field in the TIM field.

For example, manner 1 may be denoted as a first energy saving mode.

### Manner 2

Based on manner 1, the second indication information may further indicate whether at least one first field needs to be received. The at least one first field includes one or more of the following fields: a channel switch mode (channel switch mode, CSA) field, a timestamp (timestamp) field, a sequence number field, or a DTIM count field.

CSA is used to notify the STA whether channel switching needs to be performed.

Timestamp may be used to synchronize the STA in a BSS. A main timer of the BSS periodically sends a currently effective microsecond quantity. When a counter reaches a maximum value, the counter starts counting from the beginning. In normal cases, a value of Timestamp increases according to a specific rule. That is, a change of Timestamp is expected, and the STA can learn of a value of Timestamp in an upcoming beacon frame.

As described above, Sequence Number is used to indicate a sequence number of the A-MSDU or the MPDU. In normal cases, Sequence Number increases according to a specific rule. That is, a change of Sequence Number is expected, and the STA can learn of the value of Timestamp in the upcoming beacon frame.

As described above, in normal cases, DTIM counter decreases according to a specific rule. That is, a change of DTIM counter is expected, and the STA can learn of a value of DTIM counter in the upcoming beacon frame.

In conclusion, when the timestamp field, the sequence number field, and the DTIM count field do not undergo an unexpected change, even if the STA does not receive the three fields in the current beacon frame, the STA can learn of values of the three fields. Therefore, the AP may indicate the STA not to receive the three fields, and then the STA can reduce power consumption overheads.

The following describes manner 2 in detail by using an example in which the at least one first field includes the CSA field, the timestamp field, the sequence number field, and the DTIM count field.

It should be noted that, in this application, for any one of the timestamp field, the sequence number field, and the DTIM count field, that the field changes means that the field changes unexpectedly, for example, jumps or is reset. If the field does not change unexpectedly, it is considered that the field does not change.

In some embodiments, the CSA field, the timestamp field, the sequence number field, the DTIM count field, and the TIM field may be indicated as a whole. Specifically, when at least one of the CSA field, the timestamp field, the sequence number field, and the DTIM count field changes, or when the TIM field indicates that there is the to-be-transmitted data, the second indication information indicates that the TIM field, the CSA field, the timestamp field, the sequence number field, and the DTIM count field need to be received. When none of the CSA field, the timestamp field, the sequence number field, and the DTIM count field changes, and the TIM field indicates that there is no to-be-transmitted data, the second indication information indicates that the fields do not need to be received. In this embodiment, the CSA field, the timestamp field, the sequence number field, the DTIM count field, and the TIM field are indicated as a whole, so that bit overheads can be reduced. It may be understood that, in this embodiment, the second indication information may be 1 bit.

In some embodiments, the CSA field, the timestamp field, the sequence number field, and the DTIM count field may be indicated as a whole, and the TIM field is separately indicated. Specifically, when at least one of the CSA field, the timestamp field, the sequence number field, and the DTIM count field changes, the second indication information indicates that the fields need to be received. When the fields do not change, the second indication information indicates that the fields do not need to be received. When the TIM field indicates that there is no to-be-transmitted data, the second indication information indicates that the TIM field does not need to be received. When the TIM field indicates that there is the to-be-transmitted data, the second indication information indicates that the TIM field needs to be received. It may be understood that, in this embodiment, the second indication information may be 2 bits.

In some embodiments, the timestamp field, the sequence number field, and the DTIM count field may be indicated as a whole, and the CSA field and the TIM field are separately indicated. Specifically, when at least one of the timestamp field, the sequence number field, and the DTIM count field changes, the second indication information indicates that the fields need to be received. When the fields do not change, the second indication information indicates that the fields do not need to be received. When the CSA field changes, the second indication information indicates that the CSA field needs to be received. When the CSA field does not change, the second indication information indicates that the CSA field does not need to be received. When the TIM field indicates that there is no to-be-transmitted data, the second indication information indicates that the TIM field does not need to be received. When the TIM field indicates that there is the to-be-transmitted data, the second indication information indicates that the TIM field needs to be received. It may be understood that, in this embodiment, the second indication information may be 3 bits.

In some embodiments, the CSA field, the timestamp field, the sequence number field, the DTIM count field, and the TIM field may be separately indicated. Specifically, if the CSA field changes, the second indication information may indicate that the CSA field needs to be received. If the CSA field does not change, the CSA field does not need to be received. When the timestamp field changes, the second indication information may indicate that the timestamp field needs to be received. When the timestamp field does not change, the timestamp field does not need to be received. When the sequence number field changes, the second indication information may indicate that the sequence number field needs to be received. When the sequence number field does not change, the sequence number field does not need to be received. When the DTIM count field changes, the second indication information may indicate that the DTIM count field needs to be received. When the DTIM count field does not change, the DTIM count field does not need to be received. When the TIM field indicates that there is no to-be-transmitted data, the second indication information indicates that the TIM field does not need to be received. When the TIM field indicates that there is the to-be-transmitted data, the second indication information indicates that the TIM field needs to be received. It may be understood that, in this embodiment, the second indication information may be 5 bits.

For example, manner 2 may be denoted as a second energy saving mode.

### Manner 3

At least one STA associated with the AP is grouped into a plurality of groups, and the second indication information includes indication information corresponding to the plurality of groups. When the TIM field indicates that there is to-be-transmitted data of at least one STA in a first group, the indication information corresponding to the first group indicates that a STA in the first group needs to receive the TIM field; or when the TIM field indicates that there is no to-be-transmitted data of any STA in the first group, the indication information corresponding to the first group indicates that a STA in the first group does not need to receive the TIM field. The first group is any one of the plurality of groups, each of the plurality of groups includes one or more STAs, and STAs included in each group are different.

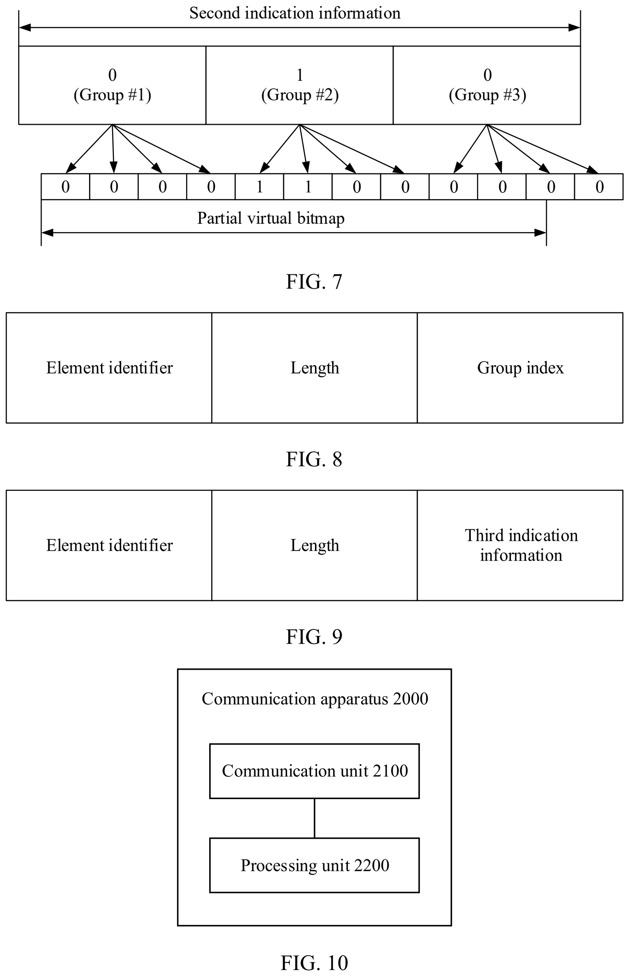

FIG. 7 is used as an example for description. Refer to FIG. 7. The at least one STA (a STA #1 to a STA #12) associated with the AP is grouped into three groups: a group #1 (the STA #1 to the STA #4), a group #2 (the STA #5 to the STA #8), and a group #3 (the STA #9 to the STA #12). The second indication information is 3 bits, and the 3 bits respectively correspond to the three groups. If a bit is 0, it indicates that a STA in a corresponding group does not need to receive the TIM field. If the bit is not 0, the STA needs to receive the TIM field. A partial virtual bitmap field in the TIM field is "000011000000." First 4 bits in the 12 bits correspond to the STA #1 to the STA #4, middle 4 bits correspond to the STA #5 to the STA #8, and last 4 bits correspond to the STA #9 to the STA #12. The partial virtual bitmap field indicates that there is no to-be-transmitted data of the STA #1 to the STA #4. Therefore, a first bit in the second indication information is 0. The STA #1 to the STA #4 may learn, based on the first bit in the second indication information, that the STA #1 to the STA #4 do not need to receive the TIM field. The partial virtual bitmap field indicates that there is to-be-transmitted data of the STA #5 and the STA #6. Therefore, a second bit in the second indication information is 1. The STA #5 to the STA #9 may learn, based on the second bit in the second indication information, that the STA #5 to the STA #9 need to receive the TIM field. The partial virtual bitmap field indicates that there is no to-be-transmitted data of the STA #9 to the STA #12. Therefore, a third bit in the second indication information is 0. The STA #9 to the STA #12 may learn, based on the third bit in the second indication information, that the STA #9 to the STA #12 do not need to receive the TIM field.

In manner 3, the STAs are grouped, and when there is no to-be-transmitted data of the STA in the group, the STA in the group may not receive the TIM field, thereby further reducing power consumption overheads.

In some embodiments, when the second indication information indicates that the STA in the group needs to receive the TIM field, the STA in the group may receive only a bit that corresponds to the group in the partial virtual bitmap field, but does not receive bits that correspond to other groups in the partial virtual bitmap field. For example, in the example shown in FIG. 7, when the STA #5 to the STA #9 learn, based on the second bit in the second indication information, that the STA #5 to the STA #9 need to receive the TIM field, the STA #5 to the STA #9 may receive entire Partial Virtual Bitmap, or may receive a fifth bit to an eighth bit in Partial Virtual Bitmap.

In some embodiments, when the second indication information indicates that the STA in the group needs to receive the TIM field, the STA in the group may receive DTIM Count in the TIM field, or may not receive DTIM Count.

For example, the second indication information may be carried in a field that is not used or reserved in the MAC header. For example, one or more of fields such as Power Management, ToDS, FromDS, More Fragments, and Protected Frame may indicate one group, that is, indicate one group of bits in the partial virtual bitmap. If any one of bits in a group in Partial Virtual Bitmap is 1, a field indicating the bit is 1, indicating that the group of bits needs to be received. If all bits in a group in Partial Virtual Bitmap are 0, a field indicating the bit is also 0, indicating that the group of bits does not need to be received.

For example, manner 3 may be denoted as a third energy saving mode.

For example, the group to which the STA belongs may be predefined, or the group to which the STA (an AID corresponding to the STA) belongs may be indicated in an association (association) /reassociation (reassociation) response (response) frame. For example, an element shown in FIG. 8 may be added to the association frame/reassociation response frame to indicate the group to which the STA belongs, where a group index is an index of the group to which the STA belongs. It should be understood that, for details of the association frame/reassociation response frame, refer to the conventional technology.

### Manner 4

Based on manner 3, the second indication information may further indicate whether at least one first field needs to be received. The at least one first field includes one or more of the following fields: a CSA field, a timestamp field, a sequence number field, or a DTIM count field.

For the fields used herein, refer to the descriptions in manner 2. Details are not described herein again.

The following describes manner 4 in detail by using an example in which the at least one first field includes the CSA field, the timestamp field, the sequence number field, and the DTIM count field.

In some embodiments, the CSA field, the timestamp field, the sequence number field, and the DTIM count field may be indicated as a whole. Specifically, when at least one of the CSA field, the timestamp field, the sequence number field, and the DTIM count field changes, the second indication information indicates that the CSA field, the timestamp field, the sequence number field, and the DTIM count field need to be received. When none of the CSA field, the timestamp field, the sequence number field, and the DTIM count field changes, the second indication information indicates that the fields do not need to be received. In this embodiment, for an indication manner of the TIM field, refer to manner 3. It may be understood that in this embodiment, the second indication information includes 1 bit required for indicating the CSA field, the timestamp field, the sequence number field, and the DTIM count field as a whole and indication information for indicating each group.

In some embodiments, the timestamp field, the sequence number field, and the DTIM count field may be indicated as a whole, and the CSA field is separately indicated. Specifically, when at least one of the timestamp field, the sequence number field, and the DTIM count field changes, the second indication information indicates that the foregoing fields need to be received. When none of the CSA field, the timestamp field, the sequence number field, and the DTIM count field changes, the second indication information indicates that the fields do not need to be received. When the CSA field changes, the second indication information indicates that the CSA field needs to be received. When the CSA field does not change, the second indication information indicates that the CSA field does not need to be received. In this embodiment, for an indication manner of the TIM field, refer to manner 3. It may be understood that, in this embodiment, the second indication information includes: 1 bit required for indicating the timestamp field, the sequence number field, and the DTIM count field as a whole, 1 bit required for separately indicating the CSA, and information for indicating each group.

In some embodiments, the CSA field, the timestamp field, the sequence number field, and the DTIM count field may be separately indicated. Specifically, if the CSA field changes, the second indication information may indicate that the CSA field needs to be received. If the CSA field does not change, the CSA field does not need to be received. When the timestamp field changes, the second indication information may indicate that the timestamp field needs to be received. When the timestamp field does not change, the timestamp field does not need to be received. When the sequence number field changes, the second indication information may indicate that the sequence number field needs to be received. When the sequence number field does not change, the sequence number field does not need to be received. When the DTIM count field changes, the second indication information may indicate that the DTIM count field needs to be received. When the DTIM count field does not change, the DTIM count field does not need to be received. In this embodiment, for an indication manner of the TIM field, refer to manner 3. It may be understood that, in this embodiment, the second indication information includes 4 bits required for separately indicating the CSA field, the timestamp field, the sequence number field, and the DTIM count field, and indication information for indicating each group.

For example, in manner 4, the second indication information may be carried in a field that is not used or reserved in the MAC header. In this scenario, manner 4 is denoted as a fourth energy saving mode.

For example, in manner 4, the second indication information may be carried in the frame body. In this scenario, manner 4 is denoted as a fifth energy saving mode.

Optionally, the second indication information may be located at a front part of the frame body. For example, the second indication information is adjacent to a basic service set identifier (basic service set identifier, BSSID) field in the frame body and follows the BSSID field.

In an implementation, the beacon frame further includes third indication information, and the third indication information indicates to enable one of a plurality of manners or a plurality of energy saving modes. The plurality of manners include manner 1, manner 2, manner 3, and manner 4. The plurality of energy saving modes include the first energy saving mode, the second energy saving mode, the third energy saving mode, the fourth energy saving mode, and the fifth energy saving mode.

In other words, the third indication information may indicate to enable one of manner 1, manner 2, manner 3, and manner 4, or indicate to enable one of the first energy saving mode, the second energy saving mode, the third energy saving mode, the fourth energy saving mode, and the fifth energy saving mode.

For example, the third indication information may be 3 bits, and a correspondence between the 3 bits and five energy saving modes is shown in Table 3.

**Table 3**

| Third indication information | Energy saving mode |
|---|---|
| 000 | First energy saving mode |
| 001 | Second energy saving mode |
| 010 | Third energy saving mode |
| 011 | Fourth energy saving mode |
| 100 | Fifth energy saving mode |

For example, if the third indication information is "011", it indicates that the fourth energy saving mode is enabled. The STA parses the beacon frame based on the fourth energy saving mode.

Optionally, the third indication information may be carried in a vendor specific field. For example, the third indication information may be carried in an unused field in the vendor specific field, or an element may be newly added to the vendor specific field to carry the third indication information. For example, the newly added element may be a structure shown in FIG. 9.

The foregoing describes the method embodiments provided in this application, and the following describes apparatus embodiments provided in this application. It should be understood that descriptions of the apparatus embodiments correspond to the descriptions of the method embodiments. Therefore, for content that is not described in detail, refer to the foregoing method embodiments. For brevity, details are not described herein again.

FIG. 10 is a block diagram of a communication apparatus according to an embodiment of this application; As shown in FIG. 10, the communication apparatus 2000 may include a communication unit 2100 and a processing unit 2200. The communication unit 2100 may implement a corresponding communication function. The communication may be internal communication of the communication apparatus 2000, or may be communication between the communication apparatus 2000 and another apparatus. The processing unit 2200 may implement a corresponding processing function. The communication unit 2100 may also be referred to as a communication interface or a transceiver unit. Optionally, the communication apparatus 2000 may further include a storage unit. The storage unit may be configured to store instructions and/or data. The processing unit 2200 may read the instructions and/or the data in the storage unit, so that the apparatus implements the foregoing method embodiments.

In a possible design, the communication apparatus 2000 may be the AP in the foregoing method embodiments, or may be a module or a chip used in the AP. The communication apparatus 2000 may be configured to perform the steps or procedures performed by the AP in the foregoing method embodiments.

Specifically, the processing unit 2200 is configured to generate a beacon frame, where the beacon frame includes at least one of first indication information and second indication information, the first indication information indicates whether a format of the beacon frame changes, and the second indication information indicates whether a traffic indication map TIM field in the beacon frame needs to be received. The communication unit 2100 is configured to send the beacon frame.

Optionally, the first indication information is a preset value or a count value N, the preset value is not equal to N, and N is an integer greater than or equal to 0; when the first indication information is the preset value, the first indication information indicates that the format of the beacon frame does not change; when N is greater than 0, the first indication information indicates that a format of an N^{th} beacon frame following the beacon frame is to change; and when N is equal to 0, the first indication information indicates that the format of the beacon frame changes.

Optionally, the first indication information is carried in a vendor specific field in the beacon frame; or the first indication information is carried in a newly added field in a frame body of the beacon frame.

Optionally, the second indication information is carried in a reserved field, a frame body field, a frame control field, or a sequence control field.

Optionally, when the TIM field indicates that there is to-be-transmitted data, the second indication information indicates that the TIM field needs to be received; or when the TIM field indicates that there is no to-be-transmitted data, the second indication information indicates that the TIM field does not need to be received.

Optionally, the second indication information further indicates whether at least one first field needs to be received, and the at least one first field includes at least one of the following fields: a channel switch mode CSA field, a timestamp field, a sequence number field, or a delivery traffic indication map DTIM count field.

Optionally, when the TIM field changes or any one of the at least one first field changes, the second indication information indicates that the TIM field and the at least one first field need to be received; or when neither the TIM field nor the at least one first field changes, the second indication information indicates that the TIM field and the at least one first field do not need to be received.

Optionally, STAs associated with the AP are grouped into a plurality of groups, and the second indication information includes indication information respectively corresponding to the plurality of groups; and when the TIM field indicates that there is to-be-transmitted data of at least one station STA in a first group, the indication information corresponding to the first group indicates that a STA in the first group needs to receive the TIM field; or when the TIM field indicates that there is no to-be-transmitted data of any STA in the first group, the indication information corresponding to the first group indicates that a STA in the first group does not need to receive the TIM field, where the first group is any one of the plurality of groups.

Optionally, the second indication information further indicates whether a CSA field and at least one second field need to be received, and the at least one second field includes at least one of the following fields: a timestamp field, a sequence number field, or a delivery traffic indication map DTIM count field; when the CSA field changes, the second indication information indicates that the CSA field needs to be received; or when the CSA field does not change, the second indication information indicates that the CSA field does not need to be received; and when any one of the at least one second field changes, the second indication information indicates that the at least one second field needs to be received; or when none of the at least one second field changes, the second indication information indicates that the at least one second field does not need to be received.

Optionally, the second indication information is carried in the frame body, and the second indication information is located at a front part of the frame body.

Optionally, the second indication information is adjacent to a basic service set identifier BSSID field in the frame body and follows the BSSID field.

In another possible design, the communication apparatus 2000 may be the STA in the foregoing method embodiments, or may be a module or a chip used in the STA. The communication apparatus 2000 may be configured to perform the steps or procedures performed by the STA in the foregoing method embodiments.

Specifically, the processing unit 2200 detects at least one of first indication information and second indication information in a beacon frame, where the first indication information indicates whether a format of the beacon frame changes, and the second indication information indicates whether a traffic indication map TIM field in the beacon frame needs to be received; and the communication unit 2100 is configured to receive the beacon frame based on a detection result of the processing unit 2200.

Optionally, the communication unit 2100 is specifically configured to: receive the beacon frame based on the first indication information when the processing unit 2200 detects the first indication information; and/or receive or skip receiving the TIM field based on the second indication information when the processing unit 2200 detects the second indication information.

Optionally, the first indication information is a preset value or a count value N, the preset value is not equal to N, and N is an integer greater than or equal to 0; when the first indication information is the preset value, the first indication information indicates that the format of the beacon frame does not change; when N is greater than 0, the first indication information indicates that a format of an N^{th} beacon frame following the beacon frame is to change; and when N is equal to 0, the first indication information indicates that the format of the beacon frame changes.

Optionally, the first indication information is carried in a vendor specific field in the beacon frame; or the first indication information is carried in a newly added field in a frame body of the beacon frame.

Optionally, the second indication information is carried in a reserved field, a frame body field, a frame control field, or a sequence control field.

Optionally, when the TIM field indicates that there is to-be-transmitted data, the second indication information indicates that the TIM field needs to be received; or when the TIM field indicates that there is no to-be-transmitted data, the second indication information indicates that the TIM field does not need to be received.

Optionally, the second indication information further indicates whether at least one first field needs to be received, and the at least one first field includes at least one of the following fields: a channel switch mode CSA field, a timestamp field, a sequence number field, or a delivery traffic indication map DTIM count field.

Optionally, when the TIM field changes or any one of the at least one first field changes, the second indication information indicates that the TIM field and the at least one first field need to be received; or when neither the TIM field nor the at least one first field changes, the second indication information indicates that the TIM field and the at least one first field do not need to be received.

Optionally, STAs associated with the AP are grouped into a plurality of groups, and the second indication information includes indication information respectively corresponding to the plurality of groups; and when the TIM field indicates that there is to-be-transmitted data of at least one station STA in a first group, the indication information corresponding to the first group indicates that a STA in the first group needs to receive the TIM field; or when the TIM field indicates that there is no to-be-transmitted data of any STA in the first group, the indication information corresponding to the first group indicates that a STA in the first group does not need to receive the TIM field, where the first group is any one of the plurality of groups.

Optionally, the second indication information further indicates whether a CSA field and at least one second field need to be received, and the at least one second field includes at least one of the following fields: a timestamp field, a sequence number field, or a delivery traffic indication map DTIM count field; when the CSA field changes, the second indication information indicates that the CSA field needs to be received; or when the CSA field does not change, the second indication information indicates that the CSA field does not need to be received; and when any one of the at least one second field changes, the second indication information indicates that the at least one second field needs to be received; or when none of the at least one second field changes, the second indication information indicates that the at least one second field does not need to be received.

Optionally, the second indication information is carried in the frame body, and the second indication information is located at a front part of the frame body.

Optionally, the second indication information is adjacent to a basic service set identifier BSSID field in the frame body and follows the BSSID field.

For details of steps or procedures performed by the units in the communication apparatus 2000, refer to the foregoing method embodiments. Details are not described herein again.

It should be understood that the "unit" in the communication apparatus 2000 may be implemented by hardware, or may be implemented by software, or may be implemented by hardware executing corresponding software. For example, the "unit" may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another appropriate component that supports the described function. For another example, the communication unit 2100 may be replaced with a transceiver/transceiver circuit (for example, the transceiver/transceiver circuit may include a receiving circuit and a sending circuit), and the processing unit 2200 may be replaced with a processor or a processing circuit.

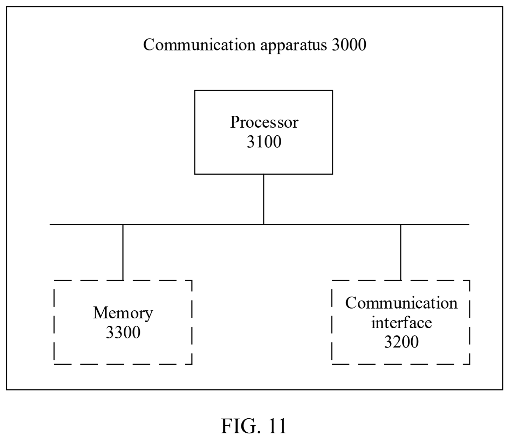

FIG. 11 is a block diagram of another communication apparatus 3000 according to an embodiment of this application. The apparatus 3000 may be an AP or a STA, or may be a chip, a chip system, a processor, or the like that supports the AP or the STA in implementing the foregoing method. The apparatus may be configured to implement the method described in the foregoing method embodiments. For details, refer to the descriptions in the foregoing method embodiments.

The apparatus 3000 may include one or more processors 3100. The processor 3100 may also be referred to as a processing unit, and may implement a specific control function. The processor 3100 may be a general-purpose processor, a dedicated processor, or the like. For example, the processor 3100 may be a baseband processor or a central processing unit. The baseband processor may be configured to process a communication protocol and communication data. The central processing unit may be configured to: control the communication apparatus (for example, a base station, a baseband chip, a user chip, a DU, or a CU), execute a software program, and process data of the software program.

In an optional design, the processor 3100 may also store instructions and/or data, and the instructions and/or the data may be run by the processor 3100, so that the apparatus 3000 performs the methods described in the foregoing method embodiments.

In another optional design, the apparatus 3000 may include a communication interface 3200 configured to implement a receiving function and a sending function. For example, the communication interface 3200 may be a transceiver circuit, an interface, an interface circuit, or a transceiver. The transceiver circuit, the interface, the interface circuit, or the transceiver configured to implement the receiving function and the sending function may be separated, or may be integrated together. The transceiver circuit, the interface, the interface circuit, or the transceiver may be configured to read and write code/data, or the transceiver circuit, the interface, the interface circuit, or the transceiver may be configured to transmit or transfer a signal.

Optionally, the apparatus 3000 may include one or more memories 3300 that may store instructions. The instructions may be run on the processor 3100, so that the apparatus 3000 performs the methods described in the foregoing method embodiments. Optionally, the memory 3300 may further store data. Optionally, the processor 3100 may also store instructions and/or data. The processor 3100 and the memory 3300 may be disposed separately, or may be integrated together.

It should be understood that, in a possible design, steps in the method embodiments provided in this application can be implemented by using a hardware integrated logic circuit in a processor, or by using instructions in a form of software. The steps in the methods disclosed with reference to embodiments of this application may be directly performed and completed by a hardware processor, or may be performed and completed by using a combination of hardware in the processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

It should be noted that, the processor in embodiments of this application may be an integrated circuit chip, and has a signal processing capability. In an implementation process, steps in the foregoing method embodiments can be implemented by using a hardware integrated logical circuit in the processor, or by using instructions in a form of software. The processor may be a general purpose processor, a digital signal processor (DSP), an application specific integrated circuit (ASIC), a field programmable gate array (FPGA) or another programmable logic device, a discrete gate or a transistor logic device, or a discrete hardware component. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus dynamic random access memory (direct rambus RAM, DR RAM). It should be noted that the memory of the systems and methods described in this specification includes but is not limited to these and any memory of another proper type.

This application further provides a computer program product. The computer program product includes computer program code. When the computer program code is run on a computer, the computer is enabled to perform steps or procedures performed by the AP or the STA in any one of the foregoing method embodiments.

This application further provides a computer-readable storage medium. The computer-readable storage medium stores program code. When the program code is run on a computer, the computer is enabled to perform steps or procedures performed by the AP or the STA in any one of the foregoing method embodiments.

This application further provides a communication apparatus, including a processor and an interface. The interface is configured to send and/or receive a signal, so that the processor performs the steps or procedures performed by the AP or the STA in any one of the foregoing method embodiments.

This application further provides a communication system, including at least one of an AP and a STA.

The foregoing apparatus embodiments are in full correspondence with the method embodiments, and corresponding modules or units perform corresponding steps. For example, a communication unit or a communication interface performs a receiving step or a sending step in the method embodiments, and a processing unit or a processor may perform a step other than the sending step and the receiving step.

In embodiments of this application, the terms and English acronyms/abbreviations are all examples given for ease of description, and shall not constitute any limitation on this application. This application does not exclude a possibility of defining another term that can implement same or similar functions in an existing or future protocol.

Terminologies such as "component", "module", and "system" used in this specification are used to indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or a thread of execution, and a component may be located on one computer and/or distributed between two or more computers. In addition, these components may be executed from a variety of computer-readable storage media having various data structures stored thereon. For example, the components may communicate by using a local and/or remote process and based on, for example, a signal having one or more data packets (for example, data from two components interacting with another component in a local system, a distributed system, and/or across a network such as the Internet interacting with other systems by using the signal).

A person of ordinary skill in the art may be aware that, in combination with illustrative logical blocks (illustrative logical block) described in embodiments disclosed in this specification and steps (step) may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It can be clearly understood by a person skilled in the art that, for ease and brevity of description, detailed working processes of the foregoing systems, apparatuses, and units may be based on corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

In the foregoing embodiments, all or some of the functions of the function units may be implemented by using software, hardware, firmware, or any combination thereof. When software is used to implement the embodiments, all or a part of the embodiments may be implemented in a form of a computer program product. The computer program product includes one or more computer instructions (programs). When the computer program instructions (programs) are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (solid state disk, SSD)), or the like.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method is applied to an access point AP, and the method comprises:
generating a beacon frame, wherein the beacon frame comprises at least one of first indication information and second indication information, the first indication information indicates whether a format of the beacon frame changes, and the second indication information indicates whether a traffic indication map TIM field in the beacon frame needs to be received; and
sending the beacon frame.

2. The method according to claim 1, wherein the first indication information is a preset value or a count value N, the preset value is not equal to N, and N is an integer greater than or equal to 0;
when the first indication information is the preset value, the first indication information indicates that the format of the beacon frame does not change;
when N is greater than 0, the first indication information indicates that a format of an N^{th} beacon frame following the beacon frame is to change; and
when N is equal to 0, the first indication information indicates that the format of the beacon frame changes.

3. The method according to claim 1 or 2, wherein the first indication information is carried in a vendor specific field in the beacon frame; or the first indication information is carried in a newly added field in a frame body of the beacon frame.

4. The method according to any one of claims 1 to 3, wherein the second indication information is carried in a reserved field, a frame body field, a frame control field, or a sequence control field.

5. The method according to any one of claims 1 to 4, wherein when the TIM field indicates that there is to-be-transmitted data, the second indication information indicates that the TIM field needs to be received; or when the TIM field indicates that there is no to-be-transmitted data, the second indication information indicates that the TIM field does not need to be received.

6. The method according to any one of claims 1 to 5, wherein the second indication information further indicates whether at least one first field needs to be received, and the at least one first field comprises at least one of the following fields: a channel switch mode CSA field, a timestamp field, a sequence number field, or a delivery traffic indication map DTIM count field.

7. The method according to claim 6, wherein when the TIM field changes or any one of the at least one first field changes, the second indication information indicates that the TIM field and the at least one first field need to be received; or when neither the TIM field nor the at least one first field changes, the second indication information indicates that the TIM field and the at least one first field do not need to be received.

8. The method according to any one of claims 1 to 4, wherein STAs associated with the AP are grouped into a plurality of groups, and the second indication information comprises indication information respectively corresponding to the plurality of groups; and
when the TIM field indicates that there is to-be-transmitted data of at least one station STA in a first group, the indication information corresponding to the first group indicates that a STA in the first group needs to receive the TIM field; or when the TIM field indicates that there is no to-be-transmitted data of any STA in the first group, the indication information corresponding to the first group indicates that a STA in the first group does not need to receive the TIM field, wherein the first group is any one of the plurality of groups.

9. The method according to claim 8, wherein the second indication information further indicates whether a CSA field and at least one second field need to be received, and the at least one second field comprises at least one of the following fields: a timestamp field, a sequence number field, or a delivery traffic indication map DTIM count field;
when the CSA field changes, the second indication information indicates that the CSA field needs to be received; or when the CSA field does not change, the second indication information indicates that the CSA field does not need to be received; and
when any one of the at least one second field changes, the second indication information indicates that the at least one second field needs to be received; or when none of the at least one second field changes, the second indication information indicates that the at least one second field does not need to be received.

10. The method according to claim 9, wherein the second indication information is carried in the frame body, and the second indication information is located at a front part of the frame body.

11. The method according to claim 10, wherein the second indication information is adjacent to a basic service set identifier BSSID field in the frame body and follows the BSSID field.

12. A communication method, wherein the method is applied to a station STA, and the method comprises:
detecting at least one of first indication information and second indication information in a beacon frame, wherein the first indication information indicates whether a format of the beacon frame changes, and the second indication information indicates whether a traffic indication map TIM field in the beacon frame needs to be received; and
receiving the beacon frame based on a detection result.

13. The method according to claim 12, wherein receiving the beacon frame based on the detection result comprises:
receiving the beacon frame based on the first indication information when the first indication information is detected; and/or
receiving or skipping receiving the TIM field based on the second indication information when the second indication information is detected.

14. The method according to claim 12 or 13, wherein the first indication information is a preset value or a count value N, the preset value is not equal to N, and N is an integer greater than or equal to 0;
when the first indication information is the preset value, the first indication information indicates that the format of the beacon frame does not change;
when N is greater than 0, the first indication information indicates that a format of an N^{th} beacon frame following the beacon frame is to change; and
when N is equal to 0, the first indication information indicates that the format of the beacon frame changes.

15. The method according to any one of claims 12 to 14, wherein the first indication information is carried in a vendor specific field in the beacon frame; or the first indication information is carried in a newly added field in a frame body of the beacon frame.

16. The method according to any one of claims 12 to 15, wherein the second indication information is carried in a reserved field, a frame body field, a frame control field, or a sequence control field.

17. The method according to any one of claims 12 to 16, wherein when the TIM field indicates that there is to-be-transmitted data, the second indication information indicates that the TIM field needs to be received; or when the TIM field indicates that there is no to-be-transmitted data, the second indication information indicates that the TIM field does not need to be received.

18. The method according to any one of claims 12 to 17, wherein the second indication information further indicates whether at least one first field needs to be received, and the at least one first field comprises at least one of the following fields: a channel switch mode CSA field, a timestamp field, a sequence number field, or a delivery traffic indication map DTIM count field.

19. The method according to claim 18, wherein when the TIM field changes or any one of the at least one first field changes, the second indication information indicates that the TIM field and the at least one first field need to be received; or when neither the TIM field nor the at least one first field changes, the second indication information indicates that the TIM field and the at least one first field do not need to be received.

20. The method according to any one of claims 12 to 16, wherein STAs associated with an access point AP are grouped into a plurality of groups, and the second indication information comprises indication information respectively corresponding to the plurality of groups; and
when the TIM field indicates that there is to-be-transmitted data of at least one station STA in a first group, the indication information corresponding to the first group indicates that a STA in the first group needs to receive the TIM field; or when the TIM field indicates that there is no to-be-transmitted data of any STA in the first group, the indication information corresponding to the first group indicates that a STA in the first group does not need to receive the TIM field, wherein the first group is any one of the plurality of groups.

21. The method according to claim 20, wherein the second indication information further indicates whether a CSA field and at least one second field need to be received, and the at least one second field comprises at least one of the following fields: a timestamp field, a sequence number field, or a delivery traffic indication map DTIM count field;
when the CSA field changes, the second indication information indicates that the CSA field needs to be received; or when the CSA field does not change, the second indication information indicates that the CSA field does not need to be received; and
when any one of the at least one second field changes, the second indication information indicates that the at least one second field needs to be received; or when none of the at least one second field changes, the second indication information indicates that the at least one second field does not need to be received.

22. The method according to claim 21, wherein the second indication information is carried in the frame body, and the second indication information is located at a front part of the frame body.

23. The method according to claim 22, wherein the second indication information is adjacent to a basic service set identifier BSSID field in the frame body and follows the BSSID field.

24. A communication apparatus, comprising a unit configured to perform steps of the method according to any one of claims 1 to 11, or comprising a unit configured to perform steps of the method according to any one of claims 12 to 23.

25. A communication apparatus, comprising a processor, wherein the processor is coupled to a memory, the memory is configured to store a program or instructions, and when the program or the instructions are executed by the processor, the apparatus is enabled to perform the method according to any one of claims 1 to 11 or the method according to any one of claims 12 to 23.

26. A communication apparatus, comprising a processor and an interface, wherein the interface is configured to send and/or receive a signal, so that the processor performs the method according to any one of claims 1 to 11 or the method according to any one of claims 12 to 23.

27. A readable storage medium, storing a computer program or instructions, wherein when the computer program or the instructions are executed, the computer is enabled to perform the method according to any one of claims 1 to 11 or the method according to any one of claims 12 to 23.

28. A computer program product, comprising computer program instructions, wherein the computer program instructions enable the computer to perform the method according to any one of claims 1 to 11 or the method according to any one of claims 12 to 23.
